# EUROPEAN PATENT SPECIFICATION

(11) **EP 3 100 959 B1**
(45) Date of publication and mention of the grant of the patent: **18.07.2018**
(21) Application number: 15743907.6
(22) Date of filing: 27.01.2015
(51) Int. Cl.: B65B 39/02, B65B 39/00, B65B 3/22

(54) **FILLING NOZZLE FOR LIQUID FILLING MACHINE**
FÜLLSTUTZEN FÜR FLÜSSIGKEITSFÜLLMASCHINE
BUSE DE REMPLISSAGE POUR MACHINE DE REMPLISSAGE DE LIQUIDE

(30) Priority: 28.01.2014 JP 2014013225
(43) Date of publication of application: 07.12.2016
(73) Proprietor: Shikoku Kakoki Co.,Ltd., Itano-gun, Tokushima 771-0287 (JP)
(72) Inventor: KONDO, Masakatsu, Itano-gun Tokushima 771-0287 (JP); MORIGUCHI, Tadakazu, Itano-gun Tokushima 771-0287 (JP)
(74) Representative: Peter, Julian
(86) International application number: PCT/JP2015/052093
(87) International publication number: WO 2015/115387

(56) References cited:
- EP-A1- 0 414 329
- WO-A2-2010/107723
- DE-A1-102011 112 576
- GB-A- 1 189 399
- JP-A- S57 177 472
- JP-A- 2007 153 354
- JP-A- 2007 153 354
- JP-B2- 2 840 969
- JP-U- 3 144 450

## Description

### Technical Field

The present invention relates to a liquid filling machine used for filling a container with liquid such as liquid meals and, more specifically, to a filler nozzle formed of an elastomer used in the liquid filling machine. The term "liquid" here includes not only a state of a liquid only, but also a state of solid-liquid mixtures containing solid matters such as fruit pulp or jelly.

### Background Art

A filler nozzle used in a liquid filling machine that fills a container with, for example, milk, yogurt, or the like described in PTL 1 given below is known.

The filler nozzle includes a nozzle wall formed of an elastomer into a substantially vertical cylindrical shape. The nozzle wall is provided with a connecting port that is to be connected to a distal end of a liquid filling tube at an upper end portion thereof. A plurality of inward folded portions are formed on the nozzle wall along a circumferential direction by a lower end portion of the nozzle wall in such a manner that a plurality of slits extending radially from a center axis of the nozzle wall are formed. The plurality of slits are closed by elasticity of the nozzle wall itself in a state in which no liquid is delivered to the liquid filling tube, and are opened by a pressure of a liquid when the liquid is delivered to the liquid filling tube.

In the aforesaid filler nozzle, if the slits open only by a small opening degree when filling the liquid, a flow velocity of the liquid discharged through the slits increases. Accordingly, the liquid may splatter on a bottom of the container and thus adhere to the filler nozzle or be accompanied by bubbling, which may cause a problem of poor filled state. In order to open the slits by a large degree, a thickness of the entire nozzle wall may simply be reduced to provide flexibility, for example. In contrast, however, if the lower end portion of the nozzle wall provided with the slits is thinned and thus has less strength, a liquid-tight property is lowered, and thus the liquid cannot be drained well after completion of filling. Consequently, suction of air may occur.

Accordingly, as means for solving the problems as descried above, a filler nozzle described in PTL 2 given below is proposed.

The filler nozzle is provided with inward protrusions extending along a longitudinal direction of each slit on inner surfaces of bilateral areas on both sides of each slit at a lower end portion of a nozzle wall, and the inward protrusions form thick parts at the lower end portion of the nozzle wall.

According to the aforesaid filler nozzle, since the thick parts are formed by the inward protrusions at the lower end portion of the nozzle wall, a lower end portion of the nozzle may be provided with strength even though the thickness of the entire nozzle wall is reduced.

However, when a protruding height of the inward protrusions increases, the inward protrusions may become obstacles for a liquid flow when the slits close, and may affect a liquid drainage adversely. In the state in which the slits are closed, a negative pressure is generated in order to retain the liquid trapped in the filler nozzle. However, if the nozzle wall is deformed by the negative pressure, the inward protrusions formed on the inner surface of the bilateral areas on both sides of each slit come into contact with each other. Consequently, the bilateral areas which should essentially be in tight contact with each other move slightly away from each other with the inward protrusions as a supporting point, and thus air is allowed to enter therefrom, so that the liquid-tight property may be impaired.

From these reasons, with the filler nozzle described in PTL2, the protruding height of the inward protrusions that serve to form the thick parts at the lower end portion of the nozzle wall is subjected to a certain restriction. Therefore, it is also difficult to increase a nozzle diameter, for example, in order to lower the flow velocity of the liquid at the filling time.

In the case of the aforesaid filler nozzle, in order not to impair opening and closing of the slits, the inward protrusions are not formed at end portions on a center axis side and on an outer peripheral side of the nozzle wall on the inner surface of the bilateral areas on both sides of each slit. Therefore, suction of air often occurs in the vicinity of the corresponding end portions of the slits.

Further prior art in this technical field is disclosed in document US 2002/127937 A1.

### Citation List

### Patent Literature

PTL1: JP-A-57-177472
PTL2: Japanese Patent No. 2840969

Further, prior art JP 2007 153354 A1 discloses the features of the preamble of claim 1.

### SUMMARY

### Technical Problem

It is an object of the present invention to provide a filler nozzle for a liquid filling machine capable of filling a liquid at an adequate flow velocity so as to achieve a desirable filling state, providing a good liquid drainage at the time of completion of filling and preventing lowering of a liquid-tight property due to suction of air.

### Solution to Problem

The present invention relates to a filler nozzle for a liquid filling machine including: a nozzle wall formed of an elastomer into a substantially vertical cylindrical shape; a connecting port to be connected to a distal end of a liquid filling tube and provided at an upper end portion of the nozzle wall; a plurality of inward folded portions formed on the nozzle wall so as to be disposed along a circumferential direction and so as to form a plurality of slits extending radially from a center axis of the nozzle wall by a lower end portion of the nozzle wall; the plurality of slits being closed by elasticity of the nozzle wall itself in a state in which no liquid is delivered to the liquid filling tube, and being opened by a pressure of a liquid applied when the liquid is delivered to the liquid filling tube, in which outward protrusions extending along a longitudinal direction of the slits are provided on outer surfaces of bilateral areas on both sides of each slit at a lower end portion of the nozzle wall, and the outward protrusions form thick parts at the lower end portion of the nozzle wall (Claim 1).

According to the filler nozzle for a liquid filling machine of the present invention, the outward protrusions are formed on the outer surfaces of the bilateral areas on both sides of each slit to form thick parts at the lower end portion of the nozzle wall. Therefore, the inner surfaces of the bilateral areas on both sides of each slit can be formed into a substantially flat-shape. Accordingly, the liquid-tight property may be enhanced by increasing a protruding height of the outward protrusions to an extent that provides a required strength, and a desirable filling state that prevents the adhesion of the liquid to the filler nozzle and an increase in bubbling due to a splatter of the liquid on a bottom of a container is ensured by lowering the flow velocity of the liquid by increasing the diameter of the nozzle. In addition, a liquid flow when closing the slits is improved and thus good liquid drainage is achieved and, furthermore, probabilities of opening of part of the slits or sucking of air due to deformation caused by a negative pressure in a state in which the slits are closed are eliminated.

In the filler nozzle for a liquid filling machine of the present invention, preferably, the outward protrusions are formed on the outer surfaces of the bilateral areas on both sides of each slit at the lower end portion of the nozzle wall excluding portions corresponding to at least an end portion of each slit on the center axis side of the nozzle wall out of both end portions (Claim 2).

As described above, with the provision of the outward protrusions so as to exclude the portions corresponding to at least the end portion of each slit on the center axis side of the nozzle wall out of both end portions, flexibility of the end portion is not impaired, and an opening-and-closing operation of the slits is not hindered due to the interference between the outward protrusions with respect to each other.

In the filler nozzle for a liquid filling machine of the present invention, preferably, the elastomer that forms the nozzle wall has a hardness between 45 and 75 degrees (Claim 3).

Examples of the elastomer that is used to form the nozzle wall of the filler nozzle include silicon rubber and fluororubber, particularly for an application of filling of liquid meals. However, if a hardness (shore hardness) exceeds 75 degrees, the opening-and-closing operation of the slits may not be performed desirably, and in contrast, if the hardness is less than 45 degrees, dripping of liquid and suction of air may occur.

In the filler nozzle for a liquid filling machine of the present invention, preferably, a thickness of the thick parts of the nozzle wall is 1.1 to 2 times the thickness of the portions adjacent to the thick parts (Claim 4).

If the thickness of the thick parts of the nozzle wall is smaller than 1.1 times the thickness of the portions adjacent to the thick parts, a strength of the lower end portion of the nozzle wall becomes insufficient and hence the liquid-tight property is impaired and poor drainage may result when a diameter of the filler nozzle is increased to a maximum limit that allows fitting of the filler nozzle in the container. In contrast, if the thickness of the thick parts exceeds twice the thickness of the adjacent portions, the opening-and-closing operation of the slits may be impaired by the thick parts.

In the filler nozzle for a liquid filling machine of the present invention, preferably, the outward protrusions are formed in a substantially angled shape or a substantially trapezoidal shape in lateral cross section, and a length from a lower end edge of the nozzle wall to a center in the vertical width of an apex or a top of the outward protrusion is 4 to 9 mm (Claim 5).

According to the configuration described thus far, the flexibility of the lower end portion of the nozzle wall is not impaired, and a superior liquid-tight property is achieved in a state in which the slits are closed.

### Brief Description of Drawings

[Fig. 1] Fig. 1 is a schematic vertical cross-sectional view illustrating a liquid filling machine comprising a filler nozzle according to the present invention.
[Fig. 2] Fig. 2 is a perspective view illustrating a filler nozzle according to the invention for a liquid filling machine.
[Fig. 3] Fig. 3 is a vertical cross-sectional view of the filler nozzle according to the invention.
[Fig. 4] Fig. 4 illustrates the filler nozzle viewed in a direction of arrows IV-IV in Fig. 3.
[Fig. 5] Fig. 5 is a partly enlarged front view of the filler nozzle viewed in a direction of arrows V-V in Fig. 4.
[Fig. 6] Fig. 6 is a partly enlarged cross-sectional view of the filler nozzle taken along a line VI-VI in Fig. 3.
[Fig. 7] Fig. 7 illustrates several modifications of outward protrusions formed on the filler nozzle according to the invention and are cross-sectional views corresponding to Fig. 6.

### DETAIL DESCRIPTION OF INVENTION

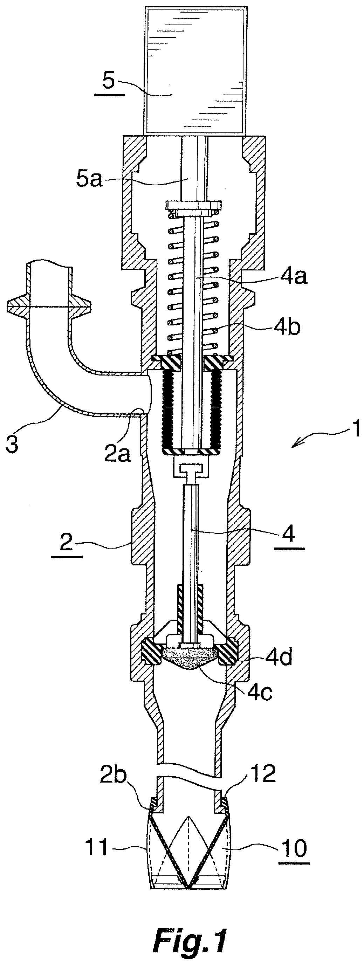

Embodiments of the present invention will be described below with reference to Fig. 1 to Fig. 7. Fig. 1 roughly illustrates a liquid filling machine. An illustrated liquid filling machine (1) includes a vertical liquid filling tube (2) having a liquid inlet port (2a) at a middle of a height thereof, a filler nozzle (10) connected to a distal end of the liquid filling tube (2), and a metering cylinder (illustration is omitted) connected to the liquid inlet port (2a) of the liquid filling tube (2) via a coupling tube (3). A check valve (4) is provided in the liquid filling tube (2).

When liquid such as a liquid meal is delivered into a liquid filling tube (1) by a fixed quantity from the metering cylinder, the check valve (4) and a lower end (slits that will be described later) of the filler nozzle (10) are opened by a pressure of the liquid, and an quantity of the liquid corresponding to the delivered quantity is filled in a container (illustration is omitted).

A piston rod (5a) oriented vertically downward of a fluid pressure cylinder (5) is disposed in an upper end portion of the liquid filling tube (2). A valve element (4c) of the check valve (4) is forcedly moved away from a seat ring (4d) when the piston rod (5a) is activated and a stem (4a) of the check valve (4) is moved downward against elasticity of a compression spring (4b). A cleaning and sterilizing liquid is passed through the interior of the liquid filling tube (2) in this state to clean and sterilize the interiors of the liquid filling tube (2) and the filler nozzle (10).

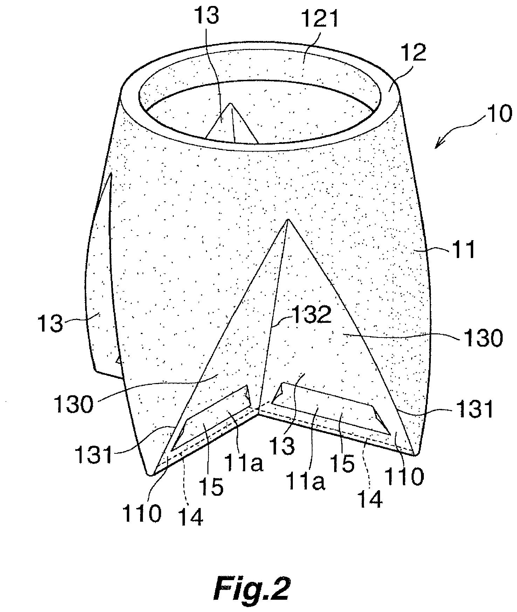

As illustrated in Fig. 2 to Fig. 5 in detail, the filler nozzle (10) includes a nozzle wall (11) having a substantially vertical cylindrical shape and opening at upper and lower ends. The nozzle wall (11) is formed of an elastomer entirely as a unit. Examples of the elastomers which are normally used include those suitable for being used for food processing such as silicon rubber and fluororubber. The elastomers having a shore hardness of 45 to 75 degrees are used.

The nozzle wall (11) is provided with a connecting port (12) to be connected to the distal end of the liquid filling tube (2) at an upper end portion thereof. The connecting port (12) has a circular shape in plan view, and includes an annular inward flange portion (121). The connecting port (12) is fitted to the distal end of the liquid filling tube (2), and the inward flange portion (121) of the connecting port (12) is engaged with an outward flange portion (2b) at the distal end of the liquid filling tube (2), so that the filler nozzle (10) is retained so as to suspend from the distal end of the liquid filling tube (2). The connecting port (12) is not limited to the illustrated one, and may have for example, a square shape or a triangular shape in plan view, so as to match a shape of the distal end of the liquid filling tube (2).

The nozzle wall (11) is provided with four inward folded portions (13) disposed along a circumferential direction. The inward folded portions (13) are formed from portions near upper end to a lower end of the nozzle wall (11) and have the same shape and same size, and each include two triangular plate-shaped portions (130), which are in lateral symmetry. The triangular plate-shaped portions (130) are defined by boundaries of two inclined folding lines (131) which intersect at upper ends thereof into an inverted V shape, a vertical folding line (132) extending downward from an intersection of the two inclined folding lines (131), and portions between the lower ends of the two inclined folding lines (131) at the lower end edge of the nozzle wall (11).

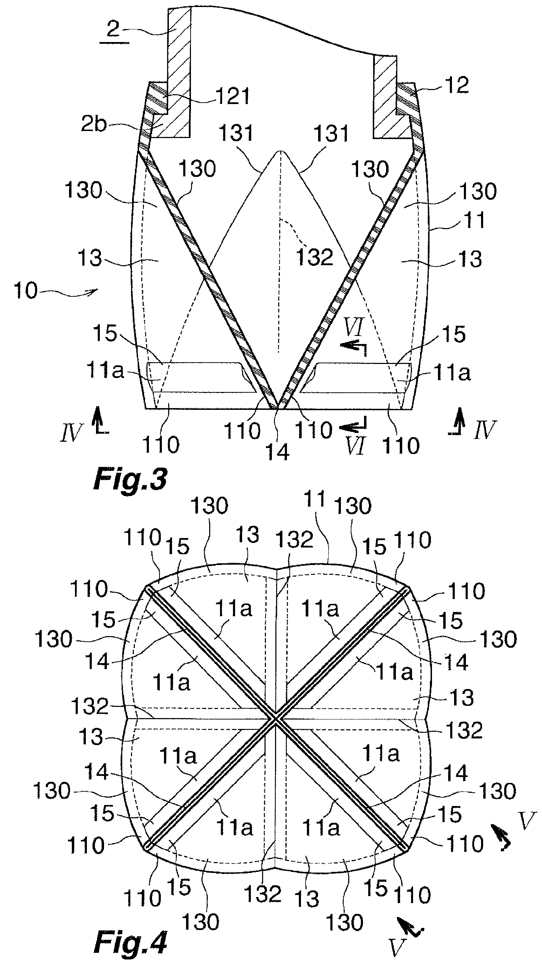

A lower end portion of the nozzle wall (11), that is, lower edge portions of the inward folded portions (13) form four slits (14) extending radially from a center axis of the nozzle wall (11) (see Fig. 4). The number of the slits (14) is not limited to four, and may be three or five or more. The number and dimensions of the inward folded portions (13) formed on the nozzle wall (11) are set as needed accordingly.

The four slits (14) are closed by elasticity of the nozzle wall (11) itself in a state in which no liquid is delivered to the liquid filling tube (2), and are opened by a pressure of a liquid into a star shape when the liquid is delivered to the liquid filling tube (2).

Outward protrusions (15) extending along a longitudinal direction of each slit (14) are formed on outer surfaces of bilateral areas (110) on both sides of each slit (14) at the lower end portion of the nozzle wall (11) (the lower edge portions of the two triangular plate-shaped portions (130) which are adjacent to each other via the slit (14)). These outward protrusions (15) form thick parts (11a) at the lower end portion of the nozzle wall (11).

The outward protrusions (15) are formed on the outer surfaces of the bilateral areas (110) on both sides of each slit (14) at the lower end portion of the nozzle wall (11) excluding portions corresponding to the both end portions of each slit (14) so as not to hinder an opening-and-closing operation of the slits (14). From the view point of interference, the outward protrusions (15) may simply be formed so as to exclude at least the portions corresponding to the end portion on the center axis side of the nozzle wall (11) out of the both end portions of the slits (14). However, from the view point of flexibility, the outward protrusions (15) are preferably formed so as to exclude the portions corresponding to the end portions of each slit (14) on both the center axis side and an outer peripheral side (the side closer to the inclined folding lines (131)) of the nozzle wall (11) like the embodiment illustrated in Fig. 2 and so forth.

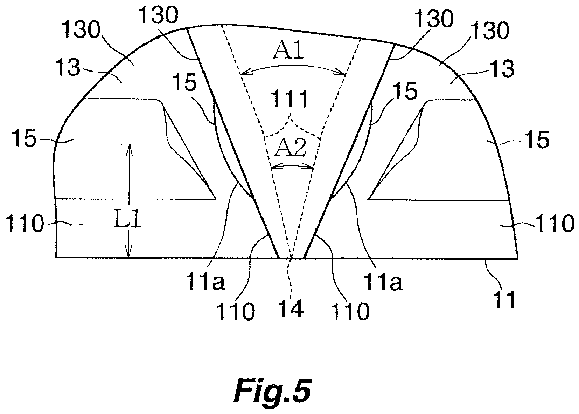

In Fig. 5, an angle (A1) formed by inner surfaces of portions of the two triangular plate-shaped portions (130) adjacent to each other via the slit (14) except for the lower edge portions is approximately 41 degrees. The angle (A1) is normally set in a range from 30 to 50 degrees. The angle formed by outer surfaces of the two triangular plate-shaped portions (130) adjacent to each other is the same as the aforesaid angle (A1).

In contrast, an angle (A2) formed by inner surfaces of the lower edge portions of the two triangular plate-shaped portions (130) adjacent to each other via the slit (14) (the inner surfaces of the bilateral areas (110) on both sides of each slit (14)) is approximately 26 degrees. The angle (A2) is normally set to a range from 15 to 35 degrees. In other words, the lower edge portions of the triangular plate-shaped portions (130) become thinner as they go toward the distal ends thereof, and the flexibility of these portions is improved and a liquid-tight property of the slits (14) is enhanced accordingly.

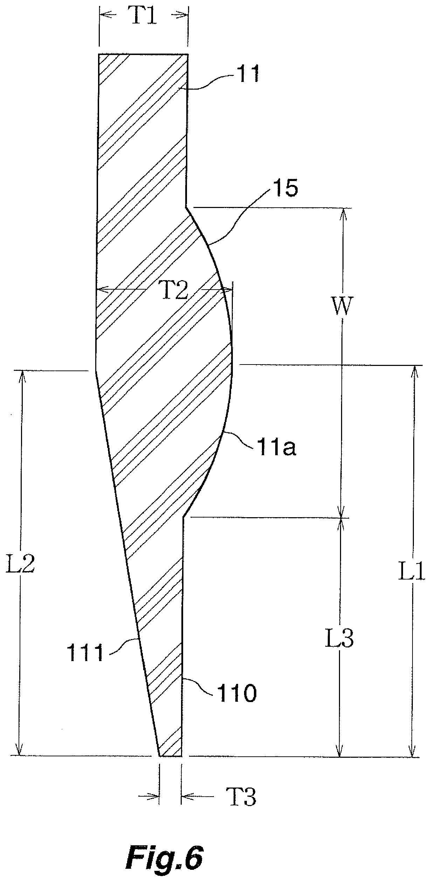

Fig. 6 illustrates the lower end portion of the nozzle wall (11) including the outward protrusion (15) in an enlarged scale. The illustrated outward protrusion (15) has a lateral cross section protruding into a gentle arc shape. Dimensions of the respective portions are set as follows, for example. Enclosed by parenthesis are suitable value ranges of the respective dimensions.
- A thickness (T1) of an upper adjacent portion of a thick part (11a) of the nozzle wall (11): 1.2 mm (0.8 to 1.5 mm)
- A thickness (T2) of the thick part (11a) of the nozzle wall (11): 1.8 mm (1.1 to 2 times the aforesaid thickness (T1)).
- A thickness (T3) of the lower end edge of the nozzle wall (11): 0.3 mm (0.1 to 1 times the aforesaid thickness (T1)).
- A length (L1) from the lower end edge of the nozzle wall (11) to an apex of the outward protrusion (15): 7 mm (4 to 9 mm)
- A length (L2) of a thinned part (111) of the lower end portion of the nozzle wall (11) where the thickness is gradually reduced: 7 mm (0 to 20 mm).
- A length (L3) from the lower end edge of the nozzle wall (11) to a lower edge of the outward protrusion (15): 3.25 mm (0 to 10 mm).
- A vertical width (W) of the outward protrusion (15): 7.5 mm (3 to 20 mm).

Where the aforesaid length (L3) is 0 mm, the outward protrusion (15) continues to the lower end edge of the nozzle wall (11).

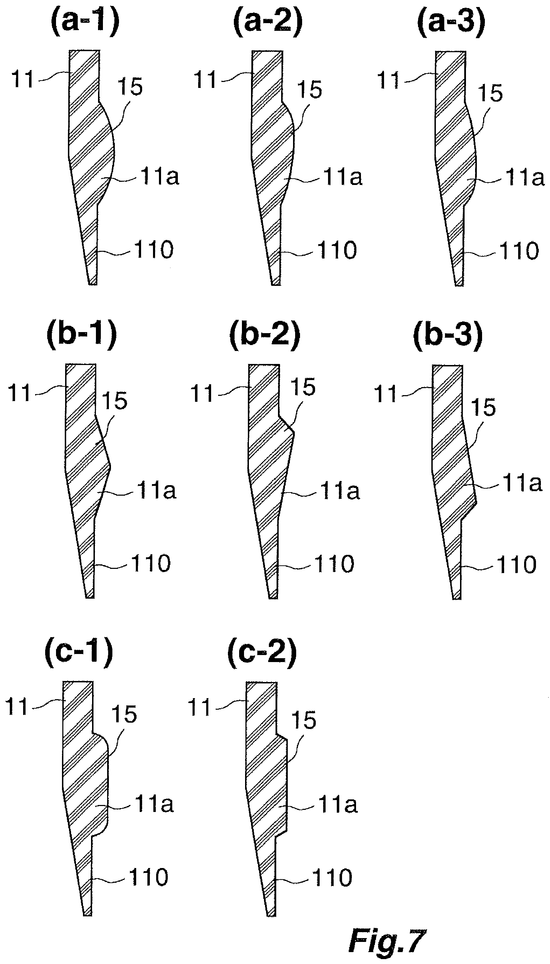

Fig. 7 illustrates several modifications relating to the lateral cross-sectional shapes of the outward protrusions (15).

The lateral cross section of the outward protrusion (15) may be a protrusion having a gentle arc shape as illustrated in the preceding drawing. However, in this case, the outward protrusion (15) may have a symmetrical shape having the apex at a center in the vertical width as illustrated in Fig. 7 (a-1) and may have non-symmetrical shapes with the apex biased upward or downward as illustrated in Fig. 7(a-2) and Fig .7(a-3). The lateral cross section of the outward protrusion (15) may have a triangular protrusion having a pointed top. In this case as well, the outward protrusion may have a symmetrical shape having the apex located at the center in the vertical width as illustrated in Fig. 7(b-1) or may have a non-symmetrical shape having the apex biased upward or downward as illustrated in Fig. 7(b-2) or Fig. 7(b-3).

Moreover, the outward protrusion (15) may have a trapezoidal shape having a flat top in lateral cross section. In this case, the upper and lower portions of the top of the outward protrusion (15) may be formed to have protruding arcuate surfaces as illustrated in Fig. 7 (c-1) or into a flat inclined surfaces as illustrated in Fig. 7(c-2).

According to the filler nozzle (10) described above, the outward protrusions (15) are formed on the outer surfaces of the bilateral areas (110) on both sides of each slit (14) to form the thick parts (11a) at the lower end portion of the nozzle wall (11). Therefore, the inner surfaces of the bilateral areas (110) on both sides of each slit (14) can be formed into a substantially flat-shape. With material configurations of the nozzle wall (11) and the dimensions of the lower end portion set as described above, the following superior advantageous effects are achieved.

In other words, by lowering a flow velocity of the liquid by increasing the diameter of the filler nozzle (1) simultaneously with the improvement of the liquid-tight property of the slits (14) in the closed state, a desirable filling state without an increase in adhesion of liquid to the filler nozzle or bubbling of the liquid due to splattering of the liquid on a bottom of the container is ensured. The opening and closing operation of the slits (14) may be performed smoothly because the flexibility of the end portion is maintained and no hindrance occurs due to interference or the like by the outward protrusions (15) with each other occurs and sufficient opening degree is ensured. In addition, a desirable flow of the liquid is achieved when the slits (14) are closed and good drainage is also achieved. Furthermore, in the state in which the slits (14) are closed, probabilities that part of the slits (14) are opened and sucking of air occurs due to the deformation caused by a negative pressure may be avoided.

### Reference Signs List

(1): liquid filling machine
(10): filler nozzle
(11): nozzle wall
(11a): thick part
(110): bilateral areas of slit at lower end portion of nozzle wall
(12): connecting port
(13): inward folded portion
(14): slit
(15): outward protrusion

## Claims

1. A filler nozzle (10) for a liquid filling machine (1) comprising:
a nozzle wall (11) formed of an elastomer into a substantially vertical cylindrical shape;
a connecting port (12) to be connected to a distal end of a liquid filling tube and provided at an upper end portion of the nozzle wall (11); and
a plurality of inward folded portions (13) formed on the nozzle wall (11) so as to be disposed along a circumferential direction and so as to form a plurality of slits (14) extending radially from a center axis of the nozzle wall (11) by a lower end portion of the nozzle wall (11), the plurality of slits (14) being closed by elasticity of the nozzle wall (11) itself in a state in which no liquid is delivered to the liquid filling tube, and being opened by a liquid pressure applied when a liquid is delivered to the liquid filling tube, **characterized in that**
outward protrusions (15) extending along a longitudinal direction of the slits (14) are formed on outer surfaces of bilateral areas (110) on both sides of each slit (14) at a lower end portion of the nozzle wall (11), and the outward protrusions (15) form thick parts (11a) at the lower end portion of the nozzle wall (11).

2. The filler nozzle (10) for a liquid filling machine (1) according to Claim 1, wherein the outward protrusions (15) are formed on the outer surfaces of the bilateral areas (110) on both sides of each slit (14) at the lower end portion of the nozzle wall (11) excluding portions corresponding to at least an end portion of each slit (14) on the center axis side of the nozzle wall (11) out of both end portions.

3. The filler nozzle (10) for a liquid filling machine (1) according to Claim 1 or 2, wherein the elastomer that forms the nozzle wall (11) has a hardness between 45 and 75 degrees.

4. The filler nozzle (10) for a liquid filling machine (1) according to any one of Claims 1 to 3, wherein a thickness of the thick parts (11a) of the nozzle wall (11) is 1.1 to 2 times the thickness of portions adjacent to the thick parts (11a).

5. The filler nozzle (10) for a liquid filling machine (1) according to any one of Claims 1 to 4, wherein the outward protrusions (15) are formed in a substantially angled shape or a substantially trapezoidal shape in lateral cross section, and a length from a lower end edge of the nozzle wall (11) to a center in the vertical width of an apex or a top of the outward protrusion (15) is 4 to 9 mm.

## Patentansprüche

1. Eine Filterdüse (10) für eine Flüssigkeitsfüflmaschine (1) umfassend:
eine Düsenwand (11), die aus einem Elastomer in eine im Wesentlichen vertikale, zylindrische Form ausgebildet ist;
ein Verbindungsanschluss (12), um mit einem Distalende eines Flüssigkeitsfüllkanals verbunden zu werden und an einem oberen Endteil der Düsenwand (11) vorgesehen zu sein; und
eine Vielzahl von nach innen gefalteten Teilen (13), die an der Düsenwand ausgebildet sind, um entlang einer Umfangsrichtung ausgebildet zu sein und um eine Vielzahl von Schlitzen (14), die sich radial von einer Mittelachse der Düsenwand (11) in der Nähe eines unteren Endteils der Düsenwand (11) erstrecken, auszubilden, die Vielzahl von Schlitzen (14), die durch die Elastizität der Düsenwand (11) selbst geschlossen ist, in einem Zustand in dem keine Flüssigkeit zu dem Flüssigkeitsfüllkanal geliefert wird, und durch einen Flüssigkeitsdruck, der anliegt, wenn eine Flüssigkeit zu dem Flüssigkeitsfüllkanal transportiert wird, geöffnet wird, **dadurch gekennzeichnet, dass**
äußere Vorsprünge (15), die sich entlang einer longitudinalen Richtung der Schlitze (14) erstrecken, auf äußeren Oberflächen von bilateralen Flächen (110) auf beiden Seiten von jedem Schlitz (14) an einem unteren Endteil der Düsenwand (11), und die äußeren Vorsprünge (15) von dicken Teilen (11a) an dem unteren Endteil der Düsenwand (11) ausgebildet sind.

2. Die Filterdüse (10) für eine Flüssigkeitsfüllmaschine (1) gemäß Anspruch 1, wobei die äußeren Vorsprünge (15) auf den äußeren Oberflächen der bilateralen Flächen (110) auf beiden Seiten von jedem Schlitz (14) an dem unteren Endteil der Düsenwand (11) ausgebildet sind, mit Ausnahme der Teile, die mit wenigstens einem Endteil von jedem Schlitz (14) auf der Mittelachsenseite der Düsenwand (11) aus beiden Endteilen korrespondieren

3. Die Filterdüse (10) für eine Flüssigkeitsfüllmaschine (1) gemäß Anspruch 1 oder 2, wobei das Elastomer, das die Düsenwand (11) ausbildet, eine Härte zwischen 45 und 75 Grad aufweist.

4. Die Filterdüse (10) für eine Flüssigkeitsfüllmaschine (1) gemäß einem der Ansprüche 1 bis 3, wobei eine Dicke der dicken Teile (11a) der Düsenwand (11) 1,1 bis 2 Mal der Dicke der an die dicken Teile (11a) angrenzenden Teile beträgt.

5. Die Filterdüse (10) für eine Flüssigkeitsfüllmaschine (1) gemäß einem der Ansprüche 1 bis 4, wobei die äußeren Vorsprünge (15) in einer im Wesentlichen angewinkelten Form oder einer im Wesentlichen Trapezform in einem lateralen Querabschnitt ausgebildet sind, und eine Länge von einer unteren Endkante der Düsenwand (11) zu einem Zentrum in der vertikalen Breite eines Scheitels oder einer Spitze des äußeren Vorsprungs (15) 4 bis 9 mm beträgt.

## Revendications

1. Buse de remplissage (10) pour une machine de remplissage de liquide (1) comprenant :
une paroi de buse (11) constituée d'un élastomère dans une forme cylindrique sensiblement verticale ;
un orifice de raccordement (12) à raccorder à une extrémité distale d'un tube de remplissage de liquide et prévu sur une portion d'extrémité supérieure de la paroi de buse (11) ; et
une pluralité de portions pliées vers l'intérieur (13) formées sur la paroi de buse (11) de sorte à être disposées le long d'une direction circonférentielle et de sorte à former une pluralité de fentes (14) s'étendant radialement depuis un axe central de la paroi de buse (11) par une portion d'extrémité inférieure de la paroi de buse (11), la pluralité de fentes (14) étant fermées par l'élasticité de la paroi de buse (11) elle-même dans un état dans lequel aucun liquide n'est délivré au tube de remplissage de liquide, et étant ouvertes par une pression de liquide appliquée lorsqu'un liquide est délivré au tube de remplissage de liquide, **caractérisée en ce que**
des saillies vers l'extérieur (15) s'étendant le long d'une direction longitudinale des fentes (14) sont formées sur des surfaces extérieures de zones bilatérales (110) sur les deux côtés de chaque fente (14) sur une portion d'extrémité inférieure de la paroi de buse (11), et les saillies vers l'extérieur (15) forment des parties épaisses (11a) sur la portion d'extrémité inférieure de la paroi de buse (11).

2. Buse de remplissage (10) pour une machine de remplissage de liquide (1) selon la revendication 1, dans laquelle les saillies vers l'extérieur (15) sont formées sur les surfaces extérieures des zones bilatérales (110) sur les deux côtés de chaque fente (14) sur la portion d'extrémité inférieure de la paroi de buse (11) excluant des portions correspondant à au moins une portion d'extrémité de chaque fente (14) sur le côté d'axe central de la paroi de buse (11) hors des deux portions d'extrémité.

3. Buse de remplissage (10) pour une machine de remplissage de liquide (1) selon la revendication 1 ou 2, dans laquelle l'élastomère qui forme la paroi de buse (11) présente une dureté entre 45 et 75 degrés.

4. Buse de remplissage (10) pour une machine de remplissage de liquide (1) selon l'une quelconque des revendications 1 à 3, dans laquelle une épaisseur des parties épaisses (11a) de la paroi de buse (11) est de 1,1 à 2 fois l'épaisseur de portions adjacentes aux parties épaisses (11a).

5. Buse de remplissage (10) pour une machine de remplissage de liquide (1) selon l'une quelconque des revendications 1 à 4, dans laquelle les saillies vers l'extérieur (15) sont formées dans une forme sensiblement anglée ou une forme sensiblement trapézoïdale en section transversale latérale, et une longueur depuis une arête d'extrémité inférieure de la paroi de buse (11) à un centre dans la largeur verticale d'un sommet ou un dessus de la saillie vers l'extérieur (15) est de 4 à 9 mm.
